# EUROPEAN PATENT SPECIFICATION

(11) **EP 3 079 494 B1**
(45) Date of publication and mention of the grant of the patent: **04.04.2018**
(21) Application number: 14796069.4
(22) Date of filing: 07.11.2014
(51) Int. Cl.: A23L 7/117, A23L 7/139, A23L 7/143, A23L 7/148, A23L 23/00, A23L 23/10, A23L 33/00, A23L 2/39, A23L 2/52, A23K 10/10

(54) **EXTRUDED FLAKES AND MANUFACTURING METHOD**
EXTRUDIERTE FLOCKEN UND HERSTELLUNGSVERFAHREN
FLOCONS EXTRUDÉS ET PROCÉDÉ DE FABRICATION

(30) Priority: 07.11.2013 EP 13192004
(43) Date of publication of application: 19.10.2016
(73) Proprietor: Nestec S.A., 1800 Vevey (CH)
(72) Inventor: CHANVRIER, Hélène Michèle Jeanne, CH-1350 Orbe (CH); DAUTREMONT, Christophe, F-25160 Oye Et Pallet (FR); GEROMINI, Osvaldo, CH-1350 Orbe (CH); KAUL, Pushkar Nath, CH-1400 Yverdon les Bains (CH); PELLEGRINI, Stéphane, F-25160 Montperreux (FR)
(74) Representative: Cogniat, Eric Jean Marie
(86) International application number: PCT/EP2014/074063
(87) International publication number: WO 2015/067766

(56) References cited:
- EP-A1- 2 401 926
- WO-A1-01/11989
- WO-A1-2009/127687
- WO-A1-2010/075226
- WO-A1-2012/056006
- WO-A2-02/052946
- US-A- 4 044 159
- GUTKOSKI L C ET AL: "Effect of extrusion process variables on physical and chemical properties of extruded oat products", PLANTS FOODS FOR HUMAN NUTRITION, KLUWER ACADEMIC PUBLISHERS, NL, vol. 54, no. 4, 1 January 1999 (1999-01-01), pages 315-325, XP002685505, ISSN: 0921-9668
- Wei Zaihong: "Effect of Twin-screw Extrusion Operation Parameters on Water Absorption Index of Extruded Cereals", Food Science , 17 June 2013 (2013-06-17), XP002723463, Retrieved from the Internet: URL:http://www.spkx.net.cn/EN/abstract/abs tract29921.shtml [retrieved on 2014-04-16]

## Description

### TECHNICAL BACKGROUND

The present invention relates to the manufacture of cereal flakes with specific texture properties based on an adjustment of the physical properties of the cereal flakes during the manufacturing process.

Cereal flakes are a popular breakfast food and have been manufactured for several years. Cereal flakes normally include cereal grains such as corn, rice, wheat and oats and can also include sugars, salts, oils and other flavorings, coloring and preservation agents, vitamins and mineral fortifiers.

Cereal flakes can be made by an extrusion process which combines mixing, cooking, kneading, shearing and forming. Typically, raw materials are fed into an extruder barrel and a screw conveys the raw materials along the barrel. The raw materials undergo heating, compression and mixing to form a thermoplastic mass. The raw materials are then extruded out of the extruder barrel into strands or ropes, which are cut into pellets. The pellets are then dried, flaked with a flaking roller, and toasted. The toasting process sometimes causes a slight expansion of the flakes or a curling of the flakes.

Alternatively, cereal flakes are made by a roller-drying process which combines preparing a slurry, cooking, drying, and milling. Typically, raw materials are mixed into a container, fed onto the surface of a cooking and drying roller, the cooked sheet is detached from the roller, dried and milled to the desired particle size.

US 4044159 discloses a ready-to-eat extruded cereal product. The only example from this document proposes extruded flakes of about 0.015 inches thickness (about 0.038 mm) which are then conveyed into a mill. This two-step technology is known for the manufacture of milled cereal flakes. Neither the structural properties of the flakes nor their reconstitution properties are disclosed.

Based on the inventor's experience, extruders in 1973 could not reach high cutting frequencies. As a consequence, extruded products had rather thick walls and low expansion rates.

One problem with current cereal flakes is that manufacturers must provide additional processing steps after extrusion in order to adjust the physical properties of extruded cereal flakes in order to obtain specific texture profiles after reconstitution. For example, texture profiles could range from flakes that immediately become soggy when wetted to flakes that remain crispy when wetted.

### SUMMARY OF THE INVENTION

The present disclosure provides improved cereal flakes and a method of manufacturing the same. In an embodiment, the disclosure allows for the correlation of the structure of the flakes (e.g., mean cell size, mean wall thickness and porosity) with physical (e.g., absorbed water or milk) and sensory (e.g., texture) properties upon reconstitution. A first aspect of the invention relates to a food-grade flake having a porosity of between 50% and 90%, a mean wall thickness of between 30 and 90 microns (µm), a thickness of between 0.5 and 2 mm, a length of between 2 and 8 mm, a liquid absorption index of between 100 and 600 g liquid/100 g of flakes, wherein the flake is based on carbohydrate material.

In another embodiment, the flake is obtainable by a cooking-extrusion-direct expansion process. In another embodiment, the flake is obtainable by a process that does not comprise a flattening step.

In another embodiment, three minutes after rehydration, the flake provides a porridge. In another embodiment, the flake is reconstitutable into water or milk, at 65°C, in less than 5 minutes. In another embodiment, the flake has an overall diameter of between 2 mm and 8 mm. A second aspect of the invention relates to coarse-milled flakes having a porosity of between 50% and 90%, a mean wall thickness of between 30 and 90 microns, a thickness of between 0.5 and 2 mm, which are obtainable by coarse-milling flakes as described above. A third aspect of the invention relates to a dry food composition obtainable by coarse milling a flake as described above, said composition comprising at least 50% by weight coarse-milled flakes, and fines. A fourth aspect of the invention relates to a dry food composition comprising flakes as described above, or coarse-milled flakes, or a mixture thereof, wherein the food product is selected from an infant cereal product, an adult cereal product, a dehydrated sauce, a dehydrated soup, a dehydrated dish, a reconstitutable beverage, or a dehydrated pet food. A fifth aspect of the invention relates to a process for manufacturing food-grade flakes which comprises: mixing a carbohydrate material in a single-screw or twin-screw extruder to form a dough; cooking the dough in the extruder at a temperature comprised between 100°C and 180°C and at a water content comprised between 5% and 30%; extruding the dough through an extrusion die; cutting the dough into flakes directly at the outlet of the die, at a cutting frequency ranging from 1000 Hz to 2800 Hz; and drying the flakes to a water content between 2% and 8%.

In another embodiment, the process does not contain a flattening step.

In another embodiment, the process further comprises coarse-milling of the flakes.

In another embodiment, the process further includes mixing the carbohydrate material with one or more of a non-cereal starchy component, a protein component, a lipid component, a fortification ingredient, and a flavor ingredient.

Additional features and advantages are described herein, and will be apparent from, the following detailed description and the figures.

### BRIEF DESCRIPTION OF THE FIGURES

Figure 1 shows X-ray tomography images of rolled flakes as described in the comparative example. Scale: A: 8 x 8 mm; B: 8 x 4 mm
Figures 2, 3 and 4 are X-ray tomography images of direct flakes as described in example 1. Scale: A: 8 x 8 mm; B: 8 x 4 mm
Figure 5 is a graph showing the mean wall thickness (in microns µm) and absorbed liquid (or liquid absorption index) (in g water / 100 g dry flakes) of direct flakes having different recipes, as described in example 2.
Figure 6 is a graph showing the granulometry of coarse-milled flakes of example 4.
Figure 7 are X-ray tomography of coarse-milled flakes as described in example 4. Scale: A and B: 10 x 10 mm

### DETAILED DESCRIPTION

Before the disclosure is described, it is to be understood that this disclosure is not limited to the particular apparatuses, methods, compositions, and experimental conditions described. It is also to be understood that the terminology used herein is for the purpose of describing particular embodiments only, and is not intended to be limiting, since the scope of the present disclosure will be limited only to the appended claims.

As used in this disclosure and the appended claims, the singular forms "a," "an" and "the" include plural referents unless the context clearly dictates otherwise. As used herein, "about" is understood to refer to numbers in a range of numerals. Moreover, all numerical ranges herein should be understood to include all integers, whole or fractions, within the range. The food compositions disclosed herein may lack any element that is not specifically disclosed herein. Thus, "comprising," as used herein, includes "consisting essentially of" and "consisting of."

The present disclosure relates to cereal flakes and the manufacture of cereal flakes with specific texture properties based on an adjustment of the physical properties of the cereal flakes during the manufacturing process. As used herein, "cereal flake" refers to a carbohydrate-based product having a porous structure and a delicate crisp texture due to the cutting and drying of the flake. It is understood that the apparatuses and methods of the present disclosure can also be used to produce similar foods from a direct extrusion process, such as other carbohydrate-based edible products. Although the present disclosure is described by referring to cereal flakes, the present disclosure is not intended to be limited to cereal flakes. For example, the flakes do not have to be used for a cereal product but can be used for other food products. "Pellets" refers to extruded balls that are not flaked with flaking rolls, as discussed below. "Rolled flakes" refers to extruded pellets that are flaked with flaking rolls, as discussed below. "Direct flakes" refers to extruded products that are cut directly as they exit an extruder, as discussed below, meaning that the flakes are produced in a single operation without downstream processing such as flattening or further slicing of extruded pellets. "Reconstitution" refers to the addition of a liquid to cereal flakes. "Reconstitutable" refers to the time when the maximum water absorption is reached by a cereal flake. "Porridge" refers to a smooth, heterogeneous mixture with a grainy texture. "Porosity" refers to the ratio of the volume of empty spaces (cells) versus the full volume of a product, as explained in the Methods section. "Mean wall thickness" refers to the average thickness of the pores of the pellets, rolled flakes and/or direct flakes as measured using x-ray tomography, and as explained in the Methods section. "Liquid absorption index" refers to the amount of liquid that can be absorbed by flakes, as explained in the Methods section.

The food-grade flakes according to the invention are based on carbohydrate material. For instance, a dry or moist carbohydrate-based ingredient mix is prepared. For instance, the carbohydrate material comprises starchy material, maltodextrin, monosaccharides, disaccharides and fibers. In a preferred embodiment, the carbohydrate material includes a whole-grain cereal. For instance, the carbohydrate cereal includes maize, oat, rice, barley, rye, wheat, sorghum, buckwheat, sweet potato, cassava, bean, pea, amaranth, and mixtures thereof, preferably as flour. The ingredient mix typically includes 50-99% cereal flour, 0-50% sugar, 0.05-1.8% salt, 0-6% oil or fat and 0 to 25% added water. The cereal flour may be maize, oat, rice, barley, rye, wheat, sorghum, buckwheat, sweet potato, cassava, bean, pea, amaranth flour or combinations thereof. The sugar may be sucrose, invert syrup, fructose syrup, glucose syrup with various dextrose equivalents, maltodextrins with various dextrose equivalents and combinations thereof. The mix may also include other potential ingredients such as milk, milk powder, fruit powders, whole grain flours, cocoa powder, malt extract, bran (flour and/or bits), flavoring and/or coloring agents, leavening agents (typically in an amount of 0-1%), flour-improvers such as enzymes (typically in an amount of 0-0.02%). The ingredient mix may further include pieces of edible material such as parts of nuts, nut paste, almonds, sugar, chocolate, , as well as seed husks which can be found in plain flour. The mix can be prepared by first mixing powdery components to obtain a dry mix. The dry mix can be fed to the cooker-extruder as such, or it can be mixed together with liquid or fluid components, prior to entering the extruder. After feeding the ingredient mix into the extruder, it can be further mixed in a first mixing section of a traditional food extruder, especially a twin screw extruder. Water (and/or steam) and/or a sugar solution and/or a fat solution can be injected in the extruder. This is preferably carried out at a low feed rate.

A direct flaking unit includes an extruder barrel, an extrusion die, a circular extrusion knife, a cutter cage and a motor. The ingredient mix is cooked in the extruder. Cooker extruders are continuous machines gathering several unit operations (conveying, mixing, melting/cooking, expanding, shaping) into one machine. The ingredient mix can be fed and cooked in a twin or single screw extruder with a specific screw configuration. Heating elements are regulated to ensure a certain temperature profile. Cooking the mixture is carried out at 100°C to 180°C, with a water content from 5% to 30%, in subsequent sections of the extruder where the mixture is heated, compressed and sheared so that it forms a cooked thermoplastic mass. Under these conditions, the material melts due to the combination of mechanical friction between the screw and the thermal energy given through the barrel. The melt is then conveyed to the die where it is subjected to pressure.

The thermoplastic mass may be extruded by having it pushed by an extruder screw or twin screw through the openings of a die at the end of the extruder. As the die constitutes the final restriction at the outlet of the extruder, it has a chosen geometry which gives a defined shape to the product. As the thermoplastic mass is forced through the narrow die, it can be followed by a sudden release of pressure that leads to a rapid evaporation of steam. This causes the resulting product to have an expanded, puffed appearance.

As the thermoplastic mass exits the extruder barrel through the extrusion die, the mass is cut into flakes by an extrusion knife. In a preferred embodiment, the extrusion knife includes a plurality of blades which are spaced at equal distances around the perimeter of the extrusion knife. In use, the extrusion knife is positioned to ensure minimum gap between the knife and the contact surface of the extrusion die at the end of the extruder barrel. As the thermoplastic mass is pushed through the extrusion die, the extrusion knife is rotated by a motor in a plane of rotation parallel to the contact surface of the extrusion die and the blades on the extrusion knife cut a plurality of direct flakes off of the extruded mass protruding through the extrusion die.

The thermoplastic mass, or dough, is cut at a cutting frequency that depends on the rotation speed of the extrusion knife and on the number of blades on the extrusion knife. The inventors have observed that the cutting frequency has a direct impact on the structural properties and reconstitution properties of the extruded product. The specific structure of the flakes of the present invention is obtained in part thanks to a high cutting frequency of from 1000 Hz to 2800 Hz, preferably from 1200 Hz to 2500 Hz. In another embodiment, the cutting frequency ranges from 1000 Hz to 2500 Hz. The impact of the cutting frequency was observed on many difference recipes, as shown in the Examples.

The knife and extrusion die are surrounded by a cutter cage that is clamped to the direct flaking unit. As the knife rotates and cuts the direct flakes off of the die, the flakes fall down the cutter cage and are collected at the bottom of the cage.

The manufacturing conditions for direct flakes made from a direct flaking process differ from the manufacturing conditions for producing rolled flakes. In a preferred embodiment, the direct flakes can be made of a carbohydrate material mixed together with one or more of a non-cereal starchy component, a protein component, a lipid component, fortification ingredients and flavour ingredients. The mixed raw materials are then cooked in an extruder at a temperature of 100-180°C with a water content of 5-30%. The mixed raw materials are then directly cut from an extruder die at a cutting frequency range of 1000 Hz to 2800 Hz and dried to a water content of 2-8%. The cutting frequency can be selected as explained above.

The extruded product is dried. The drying step can be carried out using an infrared (IR) heater or by hot-air drying. Typically, the product is placed on a mesh wire belt which goes through an IR drying machine, such that IR radiations occur from above and below the product. The drying step typically reduces the water content of the product from about 15% to a moisture content of about 1 to 6.5%. The final flakes are dried to a final residual water content of from 2% to 8%.

In an embodiment, the flakes are then coarse-milled. Coarse-milling is a size reduction of the flakes, which mainly yields pieces visible to the naked eye, where at least 50% by weight of the pieces have a size greater than 500 microns. Coarse-milled flakes are particularly suitable for preparing a powdered composition which can be reconstituted into a beverage for instance.

As set forth in the test results described below, it has been determined that desired physical (e.g., absorbed milk) and sensory (texture) properties of cereal flakes upon reconstitution can be achieved by controlling the structure of the flakes produced by direct flaking (e.g., mean cell size, mean wall thickness, porosity).

The main structure attributes driving absorbed liquid were discovered to be mean wall thickness and porosity. Absorbed liquid is negatively correlated with mean wall thickness. For a set porosity, absorbed liquid increases when mean wall thickness decreases.

The direct flakes have a porosity of 50-90%, preferably 65-90%, a mean wall thickness of 30-90 µm, preferably 35-60 µm, a thickness of 0.5-2 mm, preferably 0.8-1.6 mm, a length of 2-8 mm, and a liquid absorption index of 100-600 g of liquid/100 g of flakes, preferably of 250-400 g of liquid/100 g of flakes. Such direct flakes are particularly suitable for preparing textured porridges.

In a preferred embodiment, the major component of the ingredient mix for the direct flakes is a carbohydrate-based material.

The following non-limiting examples present scientific data developing and supporting the concept of correlating the structure of cereal flakes (e.g., mean wall thickness, porosity) with the physical (e.g., absorbed milk) and sensory (texture) properties of the cereal flakes upon reconstitution. Specifically, these examples correlate the structure of cereal flakes produced by direct flaking with the physical properties, for instance liquid absorption index, and sensory properties of the cereal flakes upon reconstitution.

Upon reconstitution in water or milk, without agitation, the flakes may retain their overall shapes or partially disintegrate depending on the processing conditions, the recipe, and on the liquid absorption index. Because the structure of the flakes is not broken due to flattening, it is believed that, initially, water migrates into the structure of the flake without altering it substantially. The matrix of the flakes does not disintegrate in water immediately. Then, due to swelling of the flakes, and because the flakes have a low mean wall thickness, some of them may disintegrate when more water is absorbed, while others retain their overall shape. As a consequence, the flakes retaining their overall shape upon reconstitution provide a specific texture and appearance to the reconstituted product which clearly differs from either a smooth porridge or from distinct flakes such as breakfast cereal flakes.

In another embodiment, three minutes after rehydration, the flake provides a porridge. In another embodiment, the flake is reconstitutable into water or milk, at 65°C, in less than 5 minutes.

### METHODS

### Determination of the internal structure of flakes and coarse-milled flakes by microcomputed X-ray tomography and 3D image analysis Images acquisition of flakes

X-ray tomography scans are performed with a 1172 Skyscan MCT (Brüker MicroCT, Kontich, Belgium) with a X-ray beam of 40kV and 100 µA. Scans are performed with the Skyscan software (version 1.5 (build 9)A (Hamamatsu 10Mp camera), reconstruction with the Skyscan recon software (version 1.6.3.0) and 3D image analysis with CTAn software (version 1.10.1.3, 64-bit).

Each flake was placed in the X-ray tomography chamber. For a pixel size of 5um, the camera was set up at 2000x1048 pixels and samples were placed in the Near position. Exposure time was 295 ms. Scans were performed over 180º, the rotation step was 0.4º and the frame averaging was 10.

The reconstruction of the dataset was performed over 900 slices in average, with the settings contrast at 0.008-0.35. Smoothing and ring artefact reduction were set up at 1 and 5, respectively.

### 3D analysis of the images

3D image analysis was performed on 10 µm per pixel reduced datasets over 450 slices. The analysis was performed in two steps: (i) a first step to select the flakes to be analysed by excluding the outer area surrounding the flakes, (ii) the second step to obtain the porosity of the flakes.

### (i) Selection of the particles, i.e. volume of interest:

The images in grey levels were segmented. The segmentation was performed at a grey level of 30, and then images were cleaned by removing any single spots smaller than 2 pixels, and then dilated by mathematical morphology. The selection of the volume of interest was performed through the shrink-wrap function, and then this volume was eroded by mathematical morphology to adjust to the surface of the flakes. Dilation and erosion parameters were chosen in order to obtain the best adjustment to the surface of the particles.

### (ii) 3D image analysis:

The images were reloaded and segmented at a grey level of 30. The porosity was then calculated as the ratio of the volume of voids in the flakes out of the flakes volume, the flakes volume being equal to the volume of interest defined above (i). The structure separation gave the pores size distribution of the flakes. The structure thickness gave the thickness of walls distribution.

### Determination of the absorption of liquid of flakes when soaked in a liquid

Determination of the liquid absorption index is performed in the presence of excess water, to ensure full rehydration of the flakes and ensure that water is not a limiting factor in this measurement. 40 grams of product are weighted accurately in a 600mL beaker. 160mL of distilled water are heated up at 65°C in a microwave equipped with a temperature sensor. The hot water is then poured on to the flakes in the beaker. The flakes are maintained under water with a plunger for one minute. The complete soaking time is thus one minute, then the hydrated flakes or porridge are poured on the sieve (2mm mesh size) to drain any leftover water. The draining time is two minutes and 30 seconds; the wet flakes are then weighted. The absorbed liquid in grams per 100 grams of dry product is obtained as such: ((wet weight of flakes-dry weight of flakes) / (dry weight of flakes)) x 100. The experiment is performed in duplicates and the average standard deviation obtained is less than 3%.

### Determination of particles size of coarse-milled flakes

The particles size distribution of coarse-milled flakes obtained by a coarse milling was assessed by a sieving method. Sieves of two different mesh sizes were used: 1 mm and 2mm. The weight of coarse-milled flakes retained on both sieves was recorded and expressed as a percentage of the total weight of coarse-milled flakes. Three fractions are thus obtained: coarse-milled flakes below 1 mm, between 1 and 2 mm, and above 2 mm. The percentage in weight of particles larger than 1 mm is also recorded.

### EXAMPLES

### Extrusion conditions

A flour composition as shown in the examples below is fed into a twin screw extruder (Clextral Evolum 88) with the following configuration: L/D = 16 (length of the processing zone/external diameter of screws), and an overall screw and barrel lengths of 1408mm. The screw configuration is shown in Table 1.

Water is added into the second barrel of the extruder to reach a water content in the dough of from 15 to 22% inside the extruder. The temperature profile is 20°C/20°C/80°C/100°C/120°C/140°C in the successive barrels, to cook the dough. The dough reaches a temperature of 140°C to 150°C at the extrusion die and a pressure of 30 bar to 120 bar, leading to an instant moisture flash-off and expansion of the extruded product. The extruded product is cut, to give expanded extruded products with a humidity of between 9 and 12%.

**Table 1**

| Length (mm) | Pitch (mm) | Flight |
|---|---|---|
| 110 | 110 | C2F |
| 352 | 88 | C2F |
| 198 | 66 | C2F |
| 396 | 44 | C2F |
| 88 | -44 | CF2C |
| 264 | 44 | C2F |

### Comparative Example: Rolled flakes

Flakes are prepared using the recipes A, or B, with the extrusion and cutting parameters, described in Table 1 and Table 2.1.

**Table 2.1**

| RECIPE | Unit | A | B |
|---|---|---|---|
| Corn | % wt | 25 | 25 |
| Soya | % wt | 25 | 25 |
| Millet | % wt | 47 | 47 |
| Sugar | % wt | 3 | 3 |

| EXTRUSION | | | |
|---|---|---|---|
| product temperature | °C | 140 | 140 |
| screw speed | rpm | 320 | 320 |
| moisture into extruder | % | 21 | 22 |
| pressure | Bar | 33 | 60 |

| CUTTING | | | |
|---|---|---|---|
| Cutting frequency | Hz | 340 | 240 |
| Die diameter | mm | 3 | 3 |

The extruded product is cut into expanded balls. The expanded balls are transported with a pneumatic conveyor toward the flaking roller, where they are flattened under a pressure of 90 bar to 100 bar, roller gap of 0.9 mm and a roll temperature of 60°C.

Porosity, mean wall thickness and liquid absorption were measured as described in the methods section. The flattened pieces have a porosity from about 30% to 36%, and thick walls with a mean wall thickness from 85 to 95 microns. They hydrate up to 380g/100g of product, as shown in Table 2.2.

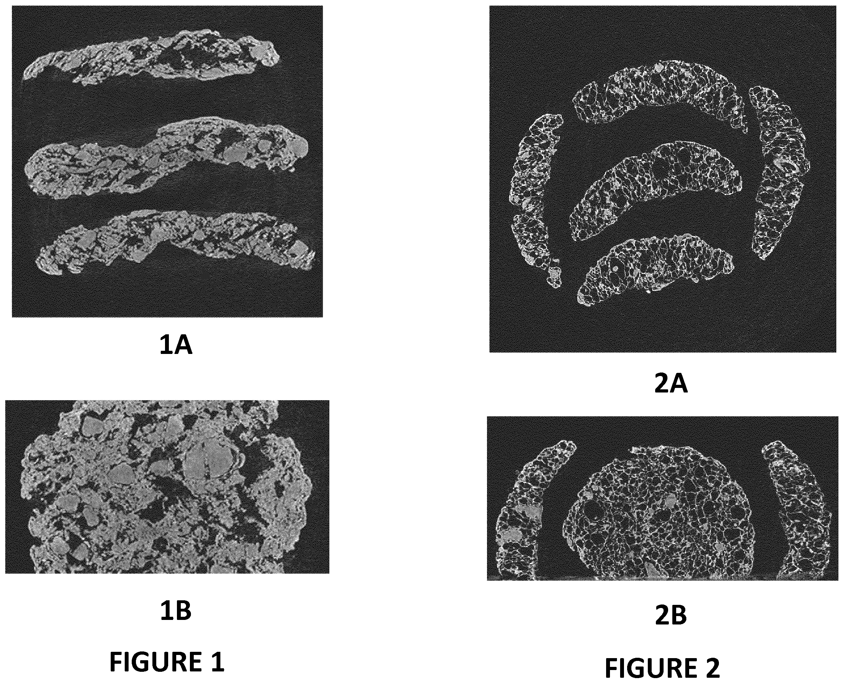

Figure 1A is a transversal view of three flattened extruded pieces by X-ray tomography, and figure 1B is a coronal view by X-ray tomography of one of these pieces. As can be seen from these views, the flattened pieces have cracks in their structure, allowing liquid to penetrate. They have a very different internal morphology compared with direct flakes shown for instance on Figure 2A and 2B, as will be seen with the examples below.

**Table 2.2**

| RECIPE | Unit | A | B |
|---|---|---|---|
| Porosity | % | 34.7 | 32.7 |
| Mean wall thickness | µm | 94.9 | 88.7 |
| Liquid absorption index | g/100g | 379.7 | 341.2 |

### Example 1: Direct extruded flakes

Direct flakes may be prepared using the recipes A, B, or C, with the extrusion and cutting parameters, described in Table 1 and Table 3.1.

**Table 3.1**

| RECIPE | Unit | A | B | C |
|---|---|---|---|---|
| Corn | % wt | 16 | 25 | 33 |
| Soya | % wt | 18 | 25 | 18 |
| Millet | % wt | 64 | 47 | 47 |
| Sugar | % wt | 2 | 3 | 2 |

| EXTRUSION | | | | |
|---|---|---|---|---|
| product temperature | °C | 140 | 140 | 140 |
| screw speed | rpm | 320 | 340 | 320 |
| moisture into extruder | % | 16 | 15 | 17 |
| pressure | Bar | 91 | 109 | 92 |

| CUTTING | | | | |
|---|---|---|---|---|
| Cutting frequency | Hz | 1600 | 2000 | 1200 |
| Die diameter | mm | 3 | 3 | 3 |
| Figure | | 2 | 3 | 4 |

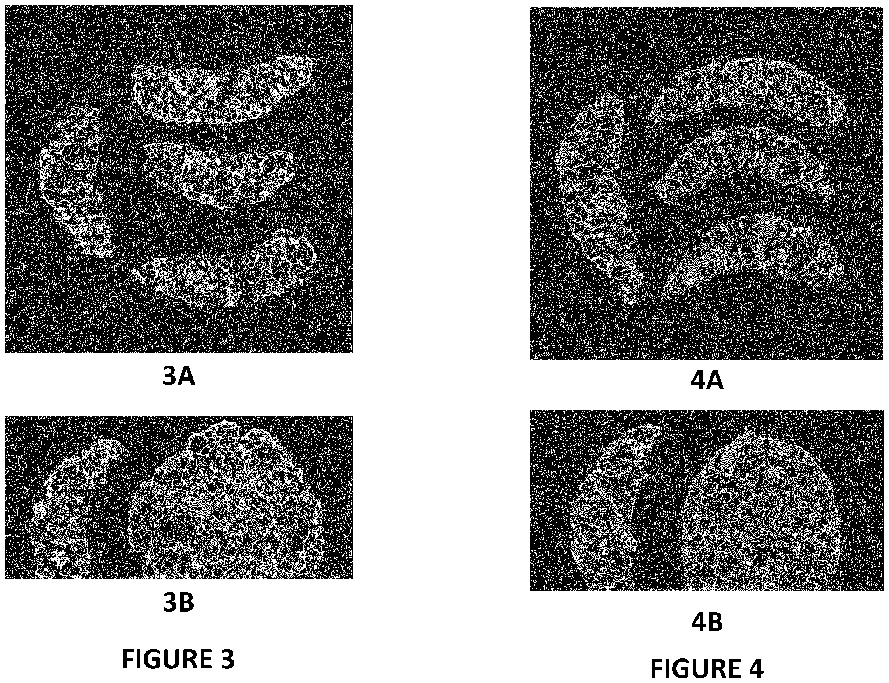

The extruded product is cut into flakes. Figures 2, 3 and 4 are transversal and coronal views of direct extruded flakes by X-ray tomography. Porosity, mean wall thickness and liquid absorption were measured as explained in the methods section. The direct extruded flakes have a porosity from about 55% to 68%, and thin walls with a mean wall thickness from 51 to 67 microns. They absorb up to 360g water per 100g of product.

The porosity of direct flakes is greater than that of rolled flakes. The mean wall thickness of direct flakes is smaller than that of rolled flakes. Overall, the liquid absorption of the direct flakes is comparable or smaller than that of rolled flakes.

A serving (e.g. from 30 g to 50 g) of flakes A, B, or C, can be reconstituted in warm milk or water (e.g. from 90 mL to 120 mL at, e.g., from 50°C to 65°C). After a few minutes without agitation, the direct flakes retain their overall shape and they provide texture to a porridge. Some flakes may disintegrate while others are still visible as swollen flakes. After agitation, most of the flakes are disintegrated.

**Table 3.2**

| RECIPE | Unit | A | B | C |
|---|---|---|---|---|
| Porosity | % | 65.2 | 60.5 | 58 |
| Mean wall thickness | µm | 51.4 | 66.1 | 61 |
| Liquid absorption index | g/100g | 360.3 | 256.3 | 277 |

### Example 2: Direct extruded flakes

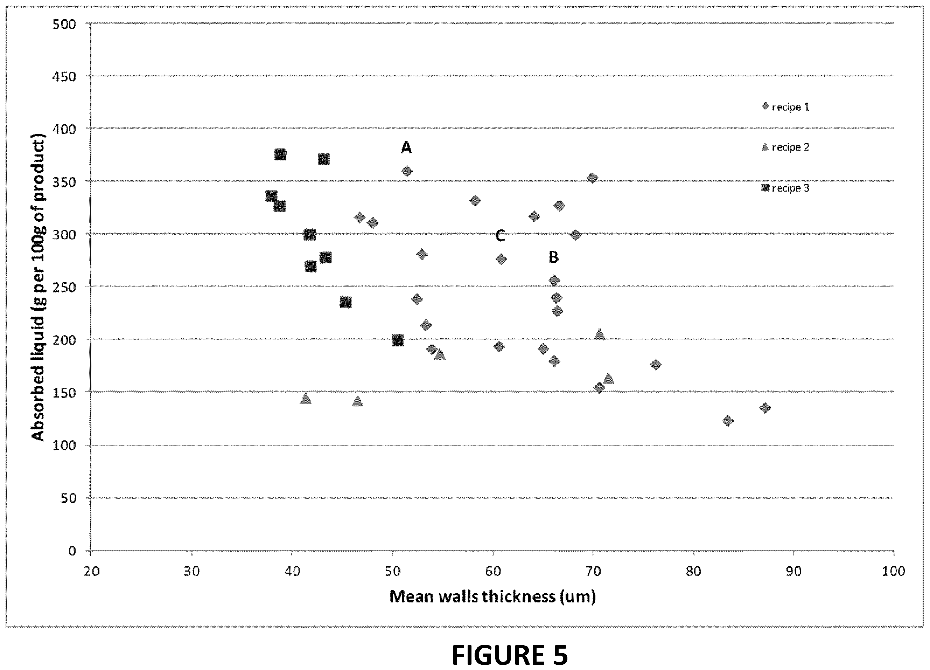

Figure 5 shows the mean wall thickness (µm) and the liquid absorption of direct flakes made with difference carbohydrate ingredients. Recipes A, B and C of Example 1 are identified in this graph. Diamonds correspond to recipe where corn, soya and millet are the main carbohydrate ingredients (recipe 1). Triangles correspond to recipes where wheat is the main carbohydrate ingredients (recipe 2). Squares correspond to recipes where wheat, corn and sorghum are the main carbohydrate ingredients (recipe 3).

Rolled flakes have lower porosity than direct flakes and also thicker walls. They absorb up to 380g/100g of product. Due to flattening, they have cracks in their structure, allowing liquid to penetrate. They have a very different internal morphology compared with direct flakes, as can be seen when comparing the X-ray tomography of rolled flakes (Figure 1) and of direct flakes (Figures 2, 3, and 4).

Direct flakes do not have cracks as there is no flattening step for their production. But their higher porosity and thinner walls in comparison to rolled flakes, allow reaching similar level of liquid absorption as rolled flakes, while providing a different texture than rolled flakes upon reconstitution in water or milk.

**Table 4**

| | **Recipe 1** | **Recipe 2** | **Recipe 3** |
|---|---|---|---|
| Whole corn flour | 25-34% | | |
| Soy flour | 17-26% | | |
| Dehulled grain millet flour | 46-65% | | |
| wheat flour | | 70-73% | |
| Whole wheat flour | | | 6-29% |
| Dehulled sorghum flour | | | 2-34% |
| Degermed corn flour | | | 54-61% |

### Example 3: Direct Flaking Sensory Tests

The direct flakes are assessed in replicate by a panel of 12 people trained for sensory texture description. During a monadic test, they were asked to assess sensory attributes with a score from 0 to 10. The correlation between physical and structural parameters, and sensory texture attributes was determined using the Pearson correlation coefficients with the minitab software.

The table below shows the statistical positive and negative correlations of physical and structural parameters of direct flakes, with sensory attributes of the same direct flakes after reconstitution.

As can be understood from Table 5, the mean wall thickness of the direct flakes correlates negatively with liquid absorption. Liquid absorption also correlates with sensory texture attributes of the reconstituted product.

Direct flakes having a high liquid absorption have thin walls, high porosity and provide smooth and mushy products such as smooth porridges.

Direct flakes having a low liquid absorption have thicker walls, lower porosity and provide more textured products.

**Table 5**

| Physical and structural parameters | Sensory texture attributes | |
|---|---|---|
| | Positive correlation | Negative correlation |
| Porosity | Cream, soggy | Hard points, crispy, semolina, gritty, chewy, floury, toothpacking |
| Mean walls thickness | Hard points, crispy, toothpacking, semolina, gritty, chewy, floury, textured | Soggy, creamy, smooth, viscosity, *liquid absorption* |
| Liquid absorption | Smooth, mushy | Textured, hard points, crispy, toothpacking, chewy, floury |

### Example 4: Coarse milling

Direct flakes may be prepared using the recipes A, or B, with the extrusion and cutting parameters, described in Table 1 and Table 6.1. After drying, the direct flakes are coarsely-milled.

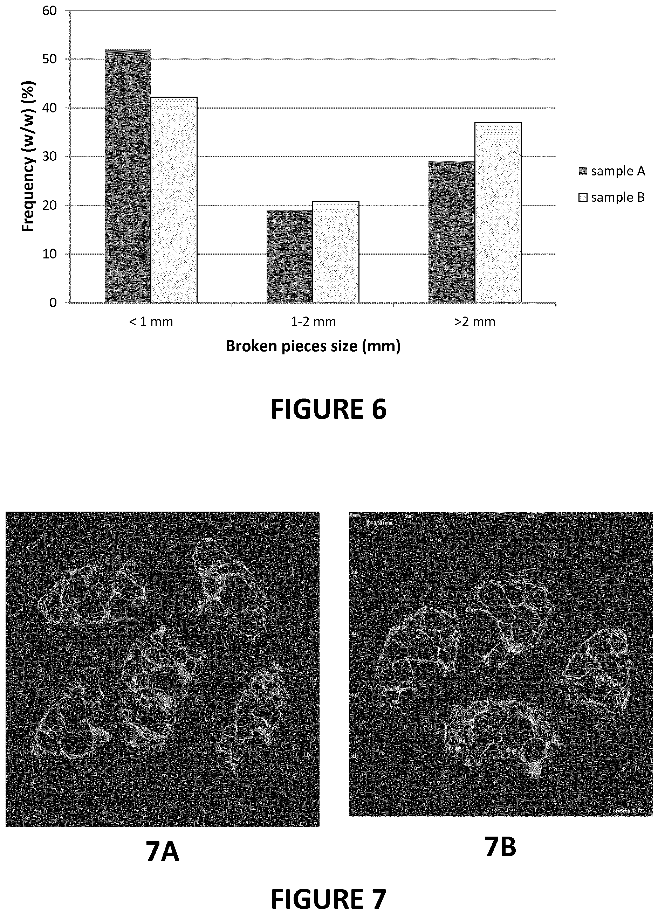

Figure 6 shows the granulometry distribution of the coarse-milled flakes of recipes A and B above. Figures 7A and 7B are X-ray tomography of the coarse-milled flakes having a granulometry above 2 mm. As can be seen on figures 7A and 7B, the coarse-milled flakes retain the overall aspect of direct flakes, especially the mean wall thickness and the overall shape. However, their porosity becomes more accessible to liquid thanks to the breaking of the flakes.

The coarse-milled flakes can be used for preparing a drink or a beverage with a satisfactory texture, or a porridge with a different texture than non-milled direct flakes.

**Table 6.1**

| RECIPE | Unit | A | B |
|---|---|---|---|
| Corn | % wt | 64 | 64 |
| Wheat | % wt | 28 | 28 |
| Rice | % wt | 2.5 | 2.5 |
| Sugar | % wt | 5.5 | 5.5 |

| EXTRUSION | | | |
|---|---|---|---|
| product temperature | °C | 140 | 140 |
| screw speed | rpm | 180 | 180 |
| moisture into extruder | % | 18 | 18.5 |
| pressure | Bar | 96 | 110 |

| CUTTING | | | |
|---|---|---|---|
| Cutting frequency | Hz | 675 | 675 |
| Die diameter | mm | 3 | 3 |
| Figure | | 7A | 7B |

| MILLING | | | |
|---|---|---|---|
| Sieve size | mm | 4 | 4 |

**Table 6.2**

| **RECIPE** | **Unit** | **A** | **B** |
|---|---|---|---|
| Porosity | % | 73.4 | 75.9 |
| Mean wall thickness | µm | 68.5 | 64.9 |
| Percentage of particles larger than 1 mm | % | 48.0 | 57.8 |
| Figure | | 7A | 7B |

## Claims

1. A food-grade flake having a porosity of between 50% and 90%, a mean wall thickness of between 30 and 90 microns, a thickness of between 0.5 and 2 mm, a length of between 2 and 8 mm, a liquid absorption index of between 100 and 600 g liquid/100 g of flakes, wherein the flake is based on carbohydrate material.

2. The flake according to claim 1, which is obtainable by a cooking-extrusion-direct expansion process.

3. The flake according to claim 1 or 2, which is obtainable by a process that does not comprise a flattening step.

4. The flake according to any one of claims 1 to 3, which is flat or curved.

5. The flake according to any one of claims 1 to 4, wherein 3 minutes after rehydration, the flake provides porridge.

6. The flake according to any one of claims 1 to 5, which is reconstitutable into water or milk, at 65°C, in less than 5 minutes, preferably in less than 2 minutes.

7. The flake according to any one of claims 1 to 6, wherein the flake has an overall diameter of between 2 mm and 8 mm.

8. A coarse-milled flake having a porosity of between 50% and 90%, a mean wall thickness of between 30 and 90 microns, a thickness of between 0.5 and 2 mm, which is obtainable by coarse milling a flake according to any one of claims 1 to 7.

9. A dry food composition obtainable by coarse milling a flake according to any one of claims 1 to 7, and comprising at least 50% by weight coarse-milled flakes according to claim 8, and fines.

10. A dry food composition comprising flakes according to any one of claims 1 to 7, or coarse-milled flakes according to claim 8, or a mixture thereof, wherein the food product is selected from an infant cereal product, an adult cereal product, a dehydrated sauce, a dehydrated soup, a dehydrated dish, a reconstitutable beverage, or a dehydrated pet food.

11. A process for manufacturing food-grade flakes which comprises:
mixing a carbohydrate material in a single-screw or twin-screw extruder to form a dough;
cooking the dough in the extruder at a temperature comprised between 100°C and 180°C and at a water content comprised between 5% and 30%;
extruding the dough through an extrusion die;
cutting the dough into flakes directly at the outlet of the die, at a cutting frequency ranging from 1000 Hz to 2800 Hz; and
drying the flakes to a water content between 2% and 8%.

12. The process according to claim 11, which does not contain a flattening step.

13. The process according to claim 11 or 12, which further comprises coarse-milling of the flakes.

14. The process according to any one of claims 11 to 13, further including mixing the carbohydrate material with one or more of a non-cereal starchy component, a protein component, a lipid component, fortification ingredients, and flavor ingredients.

15. The process according to any one of claims 11 to 14, wherein the cutting frequency ranges from 1200 Hz to 2500 Hz.

## Patentansprüche

1. Flocke in Lebensmittelqualität, die eine Porosität zwischen 50 % und 90 %, eine mittlere Wanddicke von zwischen 30 und 90 Mikrometern, eine Dicke von zwischen 0,5 und 2 mm, eine Länge von zwischen 2 und 8 mm, einen Flüssigkeitsabsorptionsindex von zwischen 100 und 600 g Flüssigkeit/100 g Flocken aufweist, wobei die Flocke auf Kohlenhydratmaterial basiert.

2. Flocke nach Anspruch 1, die durch ein Gar-Extrusion-Direktexpansionsverfahren gewonnen werden kann.

3. Flocke nach Anspruch 1 oder 2, die durch ein Verfahren, das keinen Abflachungsschritt umfasst, gewonnen werden kann.

4. Flocke nach einem der Ansprüche 1 bis 3, die flach oder gebogen ist.

5. Flocke nach einem der Ansprüche 1 bis 4, wobei die Flocke 3 Minuten nach dem Rehydratisieren einen Brei bereitstellt.

6. Flocke nach einem der Ansprüche 1 bis 5, die in Wasser oder Milch bei 65 °C in weniger als 5 Minuten, vorzugsweise in weniger als 2 Minuten, rekonstituierbar ist.

7. Flocke nach einem der Ansprüche 1 bis 6, wobei die Flocke einen Gesamtdurchmesser von zwischen 2 mm und 8 mm aufweist.

8. Grob gemahlene Flocke, die eine Porosität zwischen 50 % und 90 %, eine mittlere Wanddicke von zwischen 30 und 90 Mikrometern, eine Dicke von zwischen 0,5 und 2 mm aufweist, erhältlich durch grobes Mahlen einer Flocke nach einem der Ansprüche 1 bis 7.

9. Trockene Nahrungsmittelzusammensetzung, die durch grobes Mahlen einer Flocke nach einem der Ansprüche 1 bis 7 herstellbar ist und zu mindestens 50 Gew.-% grob gemahlene Flocken nach Anspruch 8 und Feinstoffe umfasst.

10. Trockennahrungsmittelzusammensetzung, die Flocken nach einem der Ansprüche 1 bis 7 oder grob gemahlene Flocken nach Anspruch 8 oder eine Mischung davon umfasst, wobei das Nahrungsmittelprodukt ausgewählt ist aus einem Getreideprodukt für Säuglinge, einem Getreideprodukt für Erwachsene, einer dehydratisierten Soße, einer dehydratisierten Suppe, einem dehydratisierten Gericht, einem rekonstituierbaren Getränk oder einer dehydratisierten Haustiernahrung.

11. Verfahren zum Herstellen von Flocken in Lebensmittelqualität, umfassend:
Mischen eines Kohlenhydratmaterials in einem Einschnecken- oder Doppelschneckenextruder, um einen Teig zu bilden;
Garen des Teigs im Extruder bei einer Temperatur von zwischen 100 °C und 180 °C und bei einem Wassergehalt von zwischen 5 % und 30 %;
Extrudieren des Teigs durch eine Extrusionsdüse;
Schneiden des Teigs in Flocken direkt am Auslass der Düse bei einer Schneidefrequenz im Bereich von 1000 Hz bis 2800 Hz; und
Trocknen der Flocken auf einen Wassergehalt von zwischen 2 % und 8 %.

12. Verfahren nach Anspruch 11, das keinen Abflachungsschritt beinhaltet.

13. Verfahren nach Anspruch 11 oder 12, das ferner grobes Mahlen der Flocken umfasst.

14. Verfahren nach einem der Ansprüche 11 bis 13, weiterhin umfassend das Mischen des Kohlenhydratmaterials mit einem oder mehreren Elementen aus einer nicht getreidehaltigen Stärkekomponente, einer Proteinkomponente, einer Lipidkomponente, anreichernden Inhaltsstoffen und Geschmacksinhaltsstoffen.

15. Verfahren nach einem der vorstehenden Ansprüche 11 bis 14, wobei die Schneidefrequenz im Bereich von 1200 Hz bis 2500 Hz liegt.

## Revendications

1. Flocon de qualité alimentaire ayant une porosité entre 50 % et 90 %, une épaisseur moyenne de paroi entre 30 et 90 micromètres, une épaisseur entre 0,5 et 2 mm, une longueur entre 2 et 8 mm, un indice d'absorption de liquide entre 100 et 600 g de liquide/100 g de flocons, où le flocon est à base de matériau glucidique.

2. Flocon selon la revendication 1, qui peut être obtenu par un processus de cuisson-extrusion-expansion directe.

3. Flocon selon la revendication 1 ou 2, qui peut être obtenu par un processus qui ne comprend pas d'étape d'aplatissement.

4. Flocon selon l'une quelconque des revendications 1 à 3, qui est plat ou incurvé.

5. Flocon selon l'une quelconque des revendications 1 à 4, dans lequel 3 minutes après réhydratation, le flocon produit un gruau.

6. Flocon selon l'une quelconque des revendications 1 à 5, qui peut être reconstitué dans de l'eau ou du lait, à 65 °C, en moins de 5 minutes, de préférence en moins de 2 minutes.

7. Flocon selon l'une quelconque des revendications 1 à 6, où le flocon a un diamètre global entre 2 mm et 8 mm.

8. Flocon grossièrement broyé ayant une porosité comprise entre 50 % et 90 %, une épaisseur moyenne de paroi comprise entre 30 et 90 micromètres, une épaisseur comprise entre 0,5 et 2 mm, qui peut être obtenu en broyant grossièrement un flocon selon l'une quelconque des revendications 1 à 7.

9. Composition alimentaire sèche pouvant être obtenue en broyant grossièrement un flocon selon l'une quelconque des revendications 1 à 7, et comprenant au moins 50 % en poids de flocons grossièrement broyés selon la revendication 8, et des fines.

10. Composition alimentaire sèche comprenant des flocons selon l'une quelconque des revendications 1 à 7, ou flocons grossièrement broyés selon la revendication 8, ou un mélange de ceux-ci, dans laquelle le produit alimentaire est choisi parmi un produit de céréale pour nourrisson, un produit de céréale pour adulte, une sauce déshydratée, une soupe déshydratée, un plat déshydraté, une boisson pouvant être reconstituée ou un aliment déshydraté pour animal de compagnie.

11. Procédé de fabrication de flocons de qualité alimentaire, comprenant :
le mélange d'une matière glucidique dans une extrudeuse à vis unique ou à vis jumelées afin de former une pâte ;
la cuisson de la pâte dans l'extrudeuse à une température comprise entre 100 °C et 180 °C et à une teneur en eau comprise entre 5 % et 30 % ;
l'extrusion de la pâte via une filière d'extrusion ;
la découpe de la pâte en flocons directement au niveau de la sortie de la filière, à une fréquence de coupe allant de 1000 Hz à 2800 Hz ; et
le séchage des flocons jusqu'à une teneur en eau entre 2 % et 8 %.

12. Procédé selon la revendication 11, qui ne contient pas d'étape d'aplatissement.

13. Procédé selon la revendication 11 ou 12, qui comprend également le broyage grossier des flocons :

14. Procédé selon l'une quelconque des revendications 11 à 13, comprenant en outre le mélange de la matière glucidique avec un ou plusieurs éléments parmi un composant amylacé autre qu'une céréale, un composant de protéine, un composant de lipide, des ingrédients de fortification et des ingrédients d'arôme.

15. Procédé selon l'une quelconque des revendications 11 à 14, dans lequel la fréquence de coupe va de 1200 Hz à 2500 Hz.
